# EUROPEAN PATENT APPLICATION

(11) **EP 0 648 693 A1**
(43) Date of publication of application: **19.04.1995**
(21) Application number: 94115845.3
(22) Date of filing: 07.10.1994
(51) Int. Cl.: B65G 17/20, B65G 17/38

(54) **Single-rail overhead conveyor assembly**

(30) Priority: 13.10.1993 IT MI932172
(71) Applicant: METALPROGETTI S.n.c. di Santicchi Augusto & C., I-06100 Perugia (IT)
(72) Inventor: Santicchi, Augusto, I-06132 San Sisto (Perugia) (IT)
(74) Representative: Coloberti, Luigi

(57) **Abstract**

An overhead conveyor assembly of the type comprising a segmented chain consisting of a plurality of trolleys (10) having a longitudinal axis and moving along an overhead guide track (11); each trolley (10) comprises guide and cartering means (12, 13) near its opposite ends, alternately arranged along the length chain to run on horizontal and vertical walls (16, 17, 18) of the guide track (11). Each trolley (10) is linked to a similar trolley (10) by an universal joint (19) at each of its opposite ends enabling each trolley (10) to articulate along two orthogonally arranged axes, and to independently rotate respectively along its longitudinal axis, while moving along said path. An overhead conveyor system is therefore provided which is extremely light, low noising and of considerable versatility of use.

## Description

The present invention relates to a conveying system for transporting loads and goods along a closed-loop path defined by an overthead guide track along which a plurality of load conveying trolleys move, which are appropriately connected one to the other by means of articulated joints to define a segmented chain along said path. Each trolley is provided with suitable guide and centering means arranged along orthogonally oriented axes in order to run on horizontal and vertical wall surfaces along the same slide track. The trolleys define a sort of endless chain which is continuously or intermittently drawn along the slide track, to allow the automatic removal and/or charging of loads to be transported.

Overhead transport systems of the abovementioned type are widely known and commonly used in several areas of application. Examples of overhead conveyors of chain and trolley type are described in a number of prior documents, for example in GB-A-1011930, GB-A-1379916, FR-A-1171401, DE-A-1506887 and US-A-4793473. Generally in overhead transport systems, of the type previously mentioned, each trolley or element of the chain is connected to an adjacent one by means of a single or a double axes articulation joint which allow articulation solely along one or two axes at right angles to the slide direction of the trolleys themselves. The chain of trolleys is drawn by appropriate drive wheels which engage with the wheels of each trolley, or by providing the overhead conveyor with an additional drive chain comprising special parts for hooking trolleys.

Generally, in overhead conveying systems which make use of articulated trolleys or chains, in addition to the problem of wear, there is also that of noise which is difficult to eliminate, and which is particularly serious in those work environments where the general level of noise should be maintained relatively low.

An analysis of the phenomenon has led to the main causes of this noise being identified not only in the play or clearance between the hinges connecting the trolleys, but mainly in the vibrations caused by the trolleys rubbing against the guide tracks as a result of the trolley chain being unable to adapt correctly to the guide track, in particular along paths which are complex in shape, or according to specific requirements of use. The heaviness and complexity of traditional conveyors, or the inevitable pendular movements of the loads transported, in certain cases aggravate the problem of noise generated by the moving chain of trolleys.

In order to maintain noise levels within relatively acceptable limits, it is therefore necessary to lubricate frequently and overhaul periodically the conveyor in order to replace any worn parts. All this obviously involves problems of management and maintenance of the whole overhead conveying system, with consequently higher costs and unproductive down times, without however adequately solving the problem of the noise.

An object of the present invention is to provide an overhead conveyor assembly with articulated trolleys, or equivalent overhead transport system, by means of which it is possible to reduce the noise substantially below acceptable values, at the same time eliminating the troublesome problem of lubrication, particularly for those conveyors intended to operate in specific work environments, for example for conveying items of clothing or delicate loads.

A further object of the present invention is to provide an overhead conveyor assembly, of the kind mentioned above, which has a comparatively lightweight and strong structure, which does not stress excessively the articulations of the joints between the trolleys, and which at the same time is suitable for forming special paths, allowing the trolleys to move along curved sections of extremely small radius, or such as to avoid damaging twisting of the trolley chain, which would cause excessive stiffening of the system and the danger of rubbing with the onset of vibrations as the main cause of wear and generation of noise.

A further object of the present invention is to provide an overhead conveyor assembly, of the kind referred to above, which is provided with a drive system suitable for reducing the stresses on the articulations of the trolleys, and such as to reduce the overall dimensions of height of the same conveyor.

The above is made possible by means of an overhead conveyor assembly, having the features of the claim 1, whereby the individual trolleys are fitted with guide and centering members, for example in the form of wheels, runners and the like, arranged along orthogonal axes, and wherein each trolley is connected to an adjacent one by means of an universal or triple articulated joint, allowing each trolley to perform independent movements of articulation along axes which are at right angles to the guide track, and respectively to rotate around a third longitudinal axis, in the longitudinal or slide direction of the same trolley. Providing the joint in an intermediate position and between the guide members of two contiguous trolleys, together with a drive system which directly acts on each trolley, without involving the guide parts, allow overloading on the joints to be reduced, in this way also reducing the wear and noise problems of the whole transport system.

According to a preferred embodiment, the use of ball joints for connecting the trolleys, in place of usual two-axes hinge joints, allows an extremely simple and advantageous solution in that it provides wide freedom of movement for the entire chain of trolleys, which in this way can be easily adapted to the changing configuration or arrangement of the slide track.

These and other features of an overhead conveyor assembly according to the invention, will be illustrated in greater detail hereinunder, with reference to the accompanying drawings, in which:
- Fig. 1: is a diagram of a conveyor assembly according to the invention;
- Fig. 2: is an enlarged perspective view of a portion of conveyor;
- Fig. 3: is an enlarged detail of an articulation between trolleys;
- Fig. 4: shows a first solution for the drive of the trolleys;
- Fig. 5: shows a second solution for the drive of the trolleys;
- Fig. 6: shows a different solution for the articulation joint between the trolleys;
- Fig. 7: shows a further feature of the conveyor assembly according to the invention.

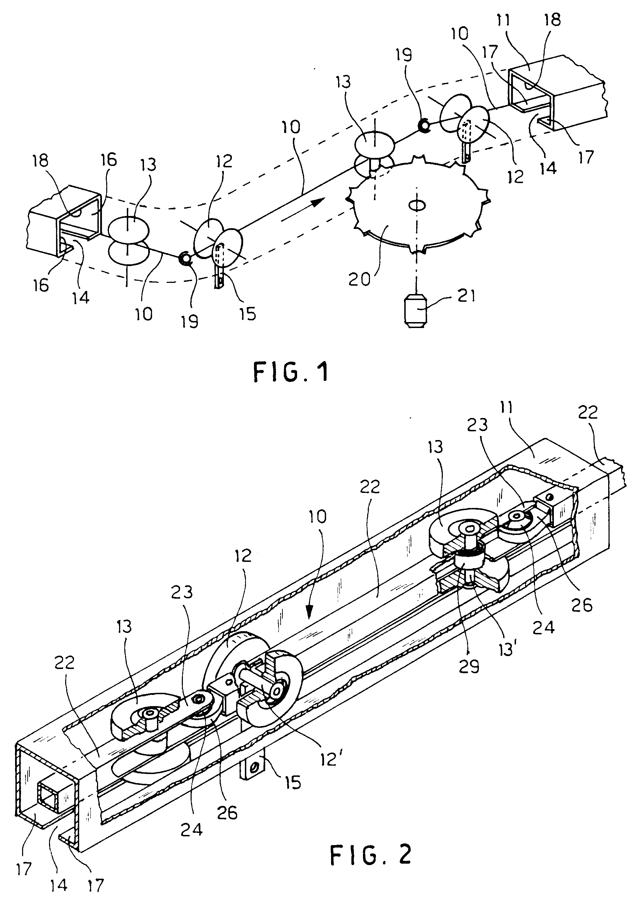

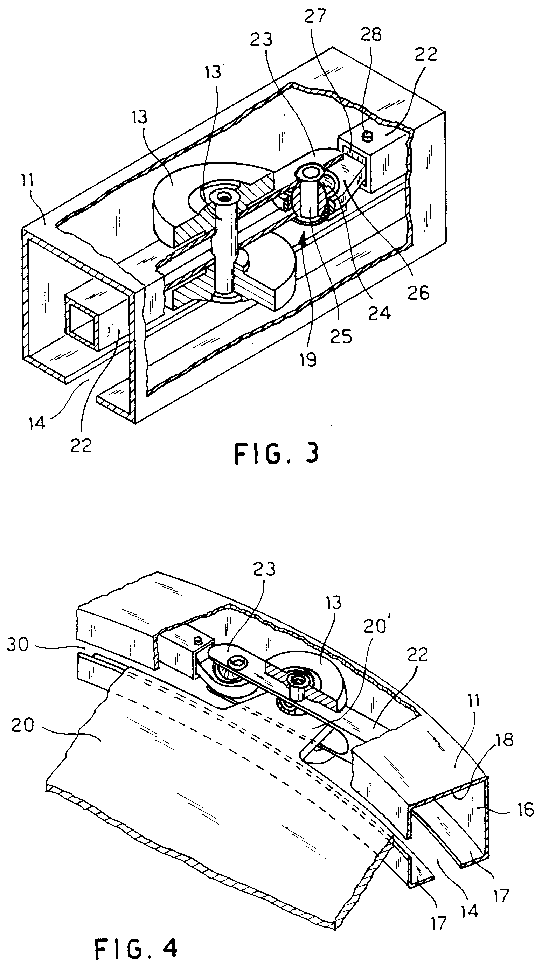

The trolley conveyor assembly, in accordance with a preferred embodiment of the invention, is to be described hereinunder with reference to figures 1 to 4 of the accompanying drawings.

As schematically shown in figure 1, the conveyor assembly substantially comprises a plurality of trolleys 10 defining a segmented chain sliding inside a guide track 11 which develops along a closed-loop path, and along a predetermined transport line. This guide track, according to the specific requirements of use, may comprise rectilinear sections, curved sections or flat and differently sloping sections for moving the trolleys on a same or different levels.

As shown in figure 2 each trolley 10 at each of its opposite ends is provided with guide and centering means which in the example shown consist of a first double support wheel 12 arranged along an horizontal axis 12' transversely extending to the guide track 11, and a second double guide wheel 13 arranged along a vertical axis 13', transversely extending to said track near the opposite ends of the trolley. In this way the double wheels 12, 13 have their rotational axes arranged at right angles one to the other, to run on respective horizontal and vertical wall surfaces inside the guide track. The wheels 12 and 13 provided near the ends of each trolley have a diameter slightly smaller than the width and height of the guide track 11.

Therefore, as shown in the diagram of figure 1, the track 11 of the example shown consists of a tubular member with a quadrangular section, having a longitudinal slot 14 on the bottom wall through which a support element 15 for supporting a load to be transported extends downwards. The support element 15 can be shaped or arranged in any way in relation to the trolley, being preferably positioned at or near the axis of the vertical support wheels 12.

In accordance with the example shown, the guide track 11 has on both sides inner wall surfaces 16 for the sliding of the guide wheels 13, as well as a bottom wall surface 17 and an upper wall surface 18 for the support wheels 12. In this way the trolleys 10 are appropriately guided and supported inside the track 11.

Each trolley 10, according to the main feature of the invention, is connected to the adjacent trolleys by means of an universal or triple articulation joint 19 preferably consisting of a ball joint which allows wide freedom of movement between the trolleys and the possibility of running along mixed paths, shaped in any way, which develop horizontally, vertically or sloping upwards and downwards, enabling each trolley to orientate and rotate independently along three orthogonal axes in order to follow any path or a possible twisting trend of the same slide track.

The possibility for each individual trolley 10 to articulate along the two axes parallel to the rotational axes of the wheels 12 and 13, and to rotate respectively around itself along the longitudinal axis, thanks to the triple connection joint, not only allows greater versatility of use of the conveyor assembly, but also contributes to considerably reducing the noise and friction problems due to the possibility of the trolleys to continuously adapt themselves to the track arrangement, or to possible rocking movements of the transported load, without creating negative stresses.

The entire chain of trolleys is driven by arranging along the path a number of cogged drive wheels 20 actuated by a respective drive motor 21. The cogged wheels 20 act directly on the individual trolleys 10 or related parts thereof, without affecting the support and guide wheels 12, 13.

According to a preferred embodiment, shown in figures 2, 3 and 4, each trolley 10 consists of a tubular body 22, for example having a square section, of comparatively small dimensions in relation to the square section of the track 11.

The tubular body 22 of the trolley has a fork-shaped end 23 at one end wherein a ball element 24 of the joint is disposed and appropriately attached to body 22 by a cross pin 25.

The spherical element 24 of the joint is arranged in turn in a spherical seat provided in an housing member 26 having a shank portion 27 fitted into the opposite end of the tubular body 22 of an adjacent trolley, whereto it is attached by means of a cross pin 28. Nevertheless it is clear that the above has been given purely by way of an example in that the trolley and both elements of the ball joint could also be differently shaped or attached, also providing the possibility of forming in a single body, by casting or moulding, the trolley with the housing member for the spherical ball.

The perfect adaptability of the ball joint inside the two opposite and appropriately shaped ends of two adjacent trolleys allows an extremely close arrangement to be maintained, at the same time enabling the trolleys to freely articulate or rotate along the three axes of the same ball joint.

From what has been related previously, with reference to figures 1 to 3, it is clear that an overhead conveyor assembly has been provided which makes use of a triple articulation joint between the trolleys, wherein the joint members may be completely housed in the body of the trolleys themselves, allowing it to be arranged spaced apart from the support and guide wheels 12, 13. This separate arrangement of the three-axis or ball joint, intermediate to the wheels of two contiguous trolleys, applied to the conveyor assembly according to the invention, allows a reaction to any type of torsional stress caused by the rocking movements of the transported load. Unlike known systems having two articulation axes, the torsional stresses on the chain of trolleys are no longer absorbed by the joint but only by the slide members or wheels of the trolleys, which in this way can be adequately dimensioned . The typical problems of noise and wear of known systems are thus considerably reduced; consequently it is possible to make the trolleys travel at comparatively higher speeds with reductions in conveying times and without damaging the joints.

As previously referred, and as schematically shown in figure 1, a further feature of the conveyor according to the invention consists in the use of cogged drive wheels which engage directly with each trolley or with parts integral thereto, arranging the drive wheel horizontally and tangentially to the trolley path.

This drive system therefore provides for the use of horizontal cogged wheels 20 on one side of the track providing the same track with a side slot 30 which allows teeth 20' of the cogged wheel 20 for each drive unit, to penetrate. The teeth 20' of the wheel 20 must to be appropriately shaped in order to engage with rollers 29 provided centrally on the vertical axis 13' of the guide wheels 13. The cogged wheels 20 must have a sufficiently large diameter and an angular pitch between the teeth suitable for allowing engagement with the continuously moving trolleys for the whole chain, or else several cogged wheels with a small diameter can be arranged, each of which engages, according to a predetermined sequence, with rollers 29 of wheels 13 of successive trolleys.

The rollers 29 are provided near one end of the trolley 11 in such a way that the space between the rotational axis of each roller and the rotational axis of the cogged wheel 20 remains unchanged both along rectilinear and curved sections of the conveyor path. This allows the cogged wheels 20 to be positioned at any point whatsoever of the path of the conveyor. Therefore the chain of trolleys is driven as if it were a normal mechanical transmission chain.

The horizontal and lateral arrangement of the drive or cogged wheels 20, as well as their engaging with each trolley 10 in a position suitable for reducing the stresses on the wheels and on the articulated connection joints, not only contributes to reducing the causes of wear and noise for the entire transport system, but also enables a closer vertical arrangement of superimposed track sections for example along overlapping paths or ones which spirally develop , thus reducing the overall dimensions of the whole system.

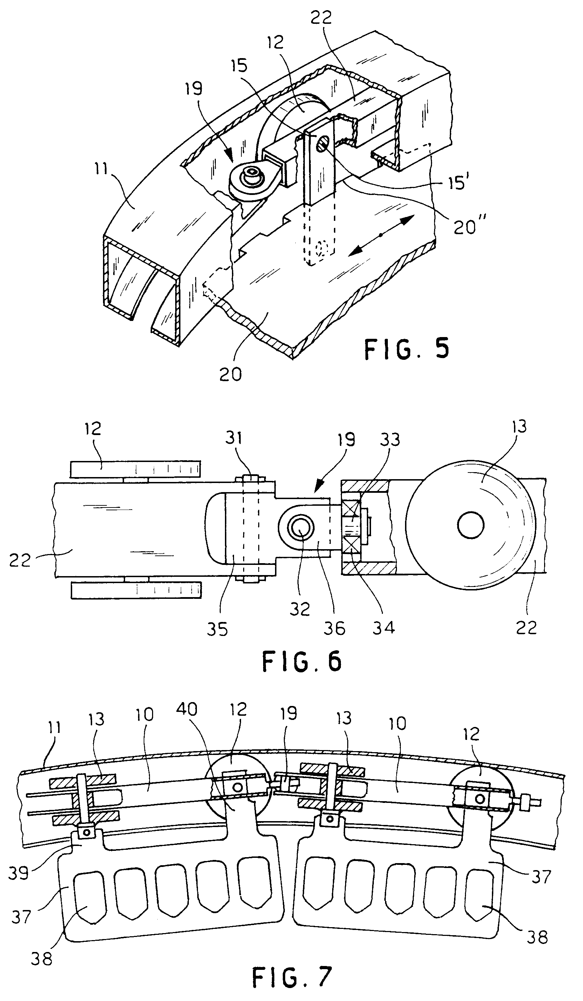

An alternative solution for driving the trolleys is shown in figure 5 of the accompanying drawings; in this case the drive wheel 20 is differently shaped, being provided with rectangular teeth 20'' which engage directly with a bracket 15 forming the load support element. The bracket 15 downwardly projects from each trolley, passing through the slot 14 in the guide track 11 to engage with the cogged wheel 20 below. The element 15 for supporting the load is rigidly connected to the tubular body 22 of the trolley, for example by inserting it into suitably aligned holes, restraining it by means of a pin or rivet 15' or in another suitable manner. In all the cases, the solutions illustrated allow advantages of space and the reduction in the causes of noise and wear.

As related previously, the use of a ball joint represents the preferred solution for the connection between trolleys, in that it allows the objects of the present invention to be wholly fulfilled by means of an extremely reliable solution with simple construction.

More particularly the provision of a direct connection between the trolleys by means of ball joint offers a number of advantages compared to the use of conventional joints with two axes.

Above all the direct linkage between the trolleys only requires the connection pin 25, simply inserted in the articulation, whereas traditional joints require several pins at right angles one to the other. This leads to a greater constructional simplification and a greater simplicity of assembly of the chain of trolleys.

Secondly it should be noted that a pin simply inserted in the ball joint is not subject to any wear, given that it does not rotate unlike traditional hinge joints. The pin of the joint may be forced into the seating, since articulation between two trolleys is now allowed by the spherical surfaces of the joint. Furthermore the wear to which the spherical sliding parts in the joint are subjected is somewhat less than the wear of pins used in joints currently in use, in view of the lower specific pressure in the joint, as a result of larger spherical contact surfaces.

Nevertheless, within the sphere of the present invention, the triple axes connection joint between trolleys could also be formed in another way, using an articulation having three independent axes according to the example in figure 6. In this case, as can be seen in the enlarged detail of said figure, the two trolleys 22 are connected by means of a triple articulation 19 comprising an intermediate connection element 35 and a U-shaped bracket element 36. One of the trolleys, for example the left-hand one, is hinged to the intermediate element 35 by means of the articulation axis 31; the intermediate element 35 is in turn hinged to the bracket element 36 through an axis 32 at right angles to the previous one. The bracket element 36 in turn has a short shank 33 which extends axially in the second trolley 22 and which can rotate along the third axis of the articulation by means of a bearing 34.

Figure 7 shows finally the use of special laminate elements 37 for supporting the articles to be transported, in place of the support element 15 of the previous examples. The laminate elements 37 are provided with a series of elongated holes 38 for hooking or suspending several objects according to a programmed order, and are attached in 39 and 40 to the pins of the double wheels 12, 13 or to equivalent slide members; furthermore they extend substantially for the whole length of each trolley, so as to provide continuity for the same support elements, at the same time allowing relative movement between the trolleys.

Some solutions of overhead conveyor assemblies with articulated trolleys according to the invention have been described; nevertheless it is clear that the invention is not limited thereto but is instead subject to other numerous variants or modifications so that the same is not intended as limited to the details described and shown, but as comprising all the other possible modifications or solutions which come within the sphere of the invention claimed. For example, in place of the tubular guide track described, guide tracks of different shape or design could be used and the same guide and support wheels 12, 13 for guiding and sliding the trolleys could be replaced by runners or by other slide means suitable for guiding the trolleys. Finally the chain of trolleys could be formed by alternating trolleys held by spherical housings 26 or by the ball elements 24 respectively at both ends of a same trolley.

## Claims

1. Overhead conveyor assembly comprising a segmented chain consisting of a plurality of load supporting trolleys (10) for transporting articles along a closed-loop path, wherein each trolley (10) comprises an elongated body having a longitudinal axis, each of said trolleys (10) being provided with a first and a second guide and centering means spaced apart of its ends to run on first and second guide surfaces (16, 17, 18) arranged at right angles and longitudinally extending along said path;
said trolleys (10) being serially connected one to the other by respective articulated joints (19);
a guide track (11) for guiding said trolleys (10) along said path, said track (11) comprising inner wall surfaces for said first and said second guide and centering means (12, 13) of the trolleys (10) defining said first and second guide surfaces (16, 17, 18);
and drive means (20, 21) for moving the trolleys (10) along said path;
characterised in that each trolley (10) of the conveyor assembly is connected to an adjacent trolley (10) by triple articulation joint (19), said joint having two articulation axes parallelly arranged to said first and second guide surfaces (16, 17, 18) respectively and a third rotational axis parallelly arranged to the longitudinal axis of the trolley itself,
and in that each of said articulating joint (19) is provided in an intermediate position between spaced apart guide and centering means (12, 13) of the facing ends of adjacent trolleys (10) of the conveyor assembly.

2. Conveyor assembly according to claim 1, characterised in that said articulation joint (19) consists of a ball joint (24, 26).

3. Conveyor assembly according to claim 1, characterised in that said articulation joint comprises three independent articulation axes (31, 32, 33) orthogonally arranged each other and between facing ends of adjacent trolleys (10) of the conveyor assembly.

4. Conveyor assembly according to any one of the previous claims, characterised in that each trolley (10) comprises a tubular body, partially extending from said guide and centering means, said articulated joint (19) being housed at protruding end of the tubular body of one of two adjacent trolleys (10) of the conveyor assembly.

5. Conveyor assembly according to any one of the previous claims, wherein each trolley (10) is provided with a load support element (15) for supporting loads, said support element (15) downwardly extending through a longitudinal slot (14) in said guide track (11), characterised in that said load support element (15) is rigidly connected to the body of the trolley (10).

6. Conveyor assembly according to claim 5, wherein each trolley (10) comprises a pair of horizontally arranged wheels (12) and a pair of vertically arranged wheels (13) spaced apart and defining said guide and centering means, characterised in that said load support element (15) is provided between and connected to the rotational axis of said horizontally arranged pair of guide wheels (12).

7. Conveyor assembly according to claim 1, characterised in that said drive means (20, 21) for moving the trolleys (10) along the slide track (11) comprise at least a cogged drive wheel (20) and a drive motor (21), said cogged wheel (20) drivingly engaging with each trolley (10), and in that said cogged wheel (20) is provided in a horizontal position on one side of the trolley guide track (11).

8. Conveyor assembly according to claim 7, characterised in that cogged wheel (20) is provided with shaped teeth (20') engaging with roller members (29) provided on the rotational axis (13') of said pair of guide wheels (13).

9. Conveyor assembly according to claim 5 or claim 7, characterised in that said cogged drive wheel (20) engages directly with said load support elements (15) of each trolley (10) of the conveyor assembly.

10. Conveyor assembly according to claim 1, characterised in that each trolley comprises a load supporting member consisting of a laminated element (37), provided with a series of openings (38), said laminated element (37) longitudinally extending for part at least of the length of the trolley (10) of said conveyor assembly.
